# EUROPEAN PATENT SPECIFICATION

(11) **EP 2 108 435 B1**
(45) Date of publication and mention of the grant of the patent: **13.10.2010**
(21) Application number: 09250832.4
(22) Date of filing: 24.03.2009
(51) Int. Cl.: B01D 46/24

(54) **Honeycomb structure**
Wabenstruktur
Structure en nid d'abeille

(30) Priority: 28.03.2008 JP 2008088116
(43) Date of publication of application: 14.10.2009
(73) Proprietor: NGK Insulators, Ltd., Nagoya-City, Aichi Pref. 467-8530 (JP)
(72) Inventor: Nakatani, Takahiko, Nagoya City, Aichi-ken 467-8530 (JP)
(74) Representative: Paget, Hugh Charles Edward

(56) References cited:
- EP-A- 1 348 843
- EP-A- 1 484 482
- EP-A- 1 837 063
- WO-A-02/10562
- US-A1- 2007 104 632

## Description

### BACKGROUND OF THE INVENTION

### 1. Field of the Invention

The present invention relates to a porous honeycomb structure which is used to remove solid particles containing carbon as a main component from a combustion exhaust gas discharged from an internal combustion engine such as a diesel engine, a boiler or the like.

### 2. Description of the Related Art

There is an increasing need to remove, from an exhaust gas, fine particles and harmful substances included in the exhaust gas from an internal combustion engine, a boiler or the like, in consideration of an influence on the environment. In particular, a regulation on the removal of the fine particles (hereinafter sometimes referred to as the particulate matter (PM)) discharged from a diesel engine tends to be strengthened worldwide, the use of the honeycomb structure as a collecting filter (hereinafter sometimes referred to as a diesel particulate filter (DPF)) for removing the PM attracts attention, and various systems are suggested. The DPF usually has a structure in which a plurality of cells constituting flow channels of a fluid to be treated are partitioned by porous partition walls. The cells are alternately plugged, and the porous partition walls forming the cells perform a filter function.

In the DPF, the exhaust gas containing fine particles is allowed to flow into one end of the filter, the fine particles are collected by the partition walls, and then the purified gas is discharged from the other end of the filter. However, there has been a problem that when the exhaust gas flows into the filter, the fine particles contained in the exhaust gas are deposited at the one end (an inflow-side end) to clog the cells. This is a phenomenon easily generated in a case where the exhaust gas contains a large amount of fine particles or in a cold district. When the cells are clogged in this manner, there is a problem that a pressure loss in the DPF rapidly increases. To suppress the clogging of the cells, there are provided two types of cells, that is, the group of the cells having a large volume (hereinafter also referred to as the large-volume cells) and the group of the cells having a small volume (hereinafter also referred to as the small-volume cells). The large-volume cell group in the exhaust gas outflow-side end of the filter is plugged with a filler, the small-volume cell group in the exhaust gas inflow-side end is plugged with the filler, and the internal surface areas of the cells opened on the inflow side (hereinafter also referred to as the inflow-side cells) are set to areas relatively larger than those of the cells opened on the outflow side (hereinafter also referred to as the outflow-side cells), thereby suppressing the increase of the pressure loss during the PM collection. Such a filter is known (e.g., see Patent Documents 1, 2 and 3). As this filter, a filter is also known in which the inflow-side cells and the outflow-side cells have octagonal and quadrangular shapes, respectively, in order to secure a predetermined strength (e.g., see Patent Documents 4 and 5).

That is, in the honeycomb structure used as the filter for the purification of the exhaust gas as disclosed in Patent Documents 1 to 5, as compared with a honeycomb structure in which the total amount of the internal surface areas of the inflow-side cell group is equal to that of the internal surface areas of the outflow-side cell group, the total amount of the surface areas of the inflow-side cell group is equal to a relatively large amount, so that the thickness of the deposited layer of the collected PM can be decreased, and eventually, as described above, the increase of the pressure loss during the PM collection can be suppressed, and the limited amount of the collected PM can be increased.

Furthermore, after collecting the predetermined amount of the PM, the engine is controlled to raise the temperature of the exhaust gas, or the temperature of a heater installed on an exhaust gas upstream side from the honeycomb structure is raised to perform a regeneration treatment treatment for bringing the PM into contact with a high-temperature gas to burn the PM. However, when the thickness of the PM deposited layer is decreased, a PM burning speed can be increased.

[Patent Document 1] JP-A-56-124417
[Patent Document 2] JP-A-62-96717
[Patent Document 3] US 4364761
[Patent Document 4] WO 02/10562A1
[Patent Document 5] FR 2789327

However, when the open ratio of the inflow-side end is increased as described above, the volume ratio of the cells with respect to the honeycomb structure increases, which causes problems that the honeycomb structure has a low density and low thermal capacity and that the temperature in the vicinity of plugging portions on the outflow side where the PM is especially easily deposited rapidly rises, thereby locally raising the temperature. That is, a problem occurs that cracks are generated owing to thermal shock during regeneration treatment treatment or that the melting of the honeycomb structure is generated owing to the self ignition of the PM or that a carried catalyst deteriorates.

### SUMMARY OF THE INVENTION

An object of the present invention is to provide a honeycomb structure in which thermal capacities of outflow-side plugging portions are increased, and the maximum temperature during a regeneration treatment treatment is suppressed to decrease defects such as crack, melting and catalyst deterioration due to the rapid temperature rise of the outflow-side end of the honeycomb structure.

The present inventor has intensively performed investigation in view of the above problems, and has found that when the depths of outflow-side plugging portions are set to depths larger than those of inflow-side plugging portions and the porosities of the outflow-side plugging portions are set to porosities smaller than those of the inflow-side plugging portions, the thermal capacities of the outflow-side plugging portions can be set to thermal capacities larger than those of the inflow-side plugging portions, and the outflow-side plugging portions can be prevented from locally reaching a high temperature during a regeneration treatment treatment. That is, according to the present invention, the following honeycomb structure is provided.

[1] A honeycomb structure having a plurality of cells partitioned by porous partition walls and constituting flow channels of a fluid to be treated, the predetermined cells in the inflow-side end of the fluid to be treated being plugged with a filler, the remaining cells in the outflow-side end of the fluid to be treated being plugged with the filler, wherein the average of the vertical sectional areas of plugging portions in the inflow-side end with respect to the central axis direction of the cells and the average of the vertical sectional areas of plugging portions in the outflow-side end with respect to the central axis direction of the cells have a relation of S1 < S2, in which S1 is an average inflow-side plugging portion sectional area and S2 is an average outflow-side plugging portion sectional area, the depths of the plugging portions in the inflow-side end and the depths of the plugging portions in the outflow-side end have a relation of D1 < D2, in which D1 is an inflow-side plugging portion depth and D2 is an outflow-side plugging portion depth, the porosity of the filler in the inflow-side end and the porosity of the filler in the outflow-side end have a relation of P1 > P2, in which P1 is an inflow-side plugging portion porosity and P2 is an outflow-side plugging portion porosity, and the thermal capacities of the plugging portions in the outflow-side end are larger than those of the plugging portions in the inflow-side end.

[2] The honeycomb structure according to the above [1], wherein the average inflow-side plugging portion sectional area S1 is in a range of 0.2 mm² < S1 < 1.0 mm², the average outflow-side plugging portion sectional area S2 is in a range of 0.4 mm² < S2 < 1.4 mm², the inflow-side plugging portion depth D1 is in a range of 2 mm < D1 < 10 mm, the outflow-side plugging portion depth D2 is in a range of 5 mm < D2 < 20 mm, the inflow-side plugging portion porosity P1 is in a range of 50% < P1 < 70%, and the outflow-side plugging portion porosity P2 is in a range of 30% < P2 < 60%.

[3] The honeycomb structure according to the above [1], wherein the average inflow-side plugging portion sectional area S1 is in a range of 0.3 mm² < S1 < 0.7 mm², the average outflow-side plugging portion sectional area S2 is in a range of 0.6 mm² < S2 < 1.2 mm², the inflow-side plugging portion depth D1 is in a range of 3 mm < D1 < 7 mm, the outflow-side plugging portion depth D2 is in a range of 8 mm < D2 < 18 mm, the inflow-side plugging portion porosity P1 is in a range of 55% < P1 < 65%, and the outflow-side plugging portion porosity P2 is in a range of 35% < P2 < 55%.

[4] The honeycomb structure according to any one of the above [1] to [3], wherein the opposite ends of the cells disposed on both sides which sandwich one of the partition walls are plugged, and the vertical sectional shape of the cell plugged in the inflow-side end with respect to the central axis direction is different from that of the cell plugged in the outflow-side end with respect to the central axis direction.

In the honeycomb structure for use in a filter for the purification of an exhaust gas, when the vertical sectional area of each outflow-side plugging portion with respect to the cell central axis direction (a longitudinal direction) is set to a vertical sectional area larger than that of each inflow-side plugging portion, the depth of the outflow-side plugging portion is set to a depth larger than that of the inflow-side plugging portion and the porosity of the outflow-side plugging portion is set to a porosity smaller than that of the inflow-side plugging portion, the thermal capacity of the outflow-side plugging portion can be larger than that of the inflow-side plugging portion. That is, the local temperature rise of the outflow-side plugging portion during the regeneration treatment is prevented, the maximum temperature of the filter is controlled to a temperature lower than a durable temperature, a thermal stress in the outflow-side plugging portion is relaxed, and the generation of crack or melting or the deterioration of a catalyst can be decreased.

### BRIEF DESCRIPTION OF THE DRAWINGS

Fig. 1 is a perspective view schematically showing a honeycomb structure of Embodiment 1 of the present invention formed by joining honeycomb segments together;
Fig. 2 is a perspective view schematically showing the honeycomb segment constituting the honeycomb structure of Fig. 1;
Fig. 3 is a sectional view cut along the A-A line of Fig. 2; and
Fig. 4 is a perspective view schematically showing an monolithically formed honeycomb structure of Embodiment 2 of the present invention.

### [Description of Reference Numerals]

1: joined type honeycomb structure, 2: honeycomb segment, 4: outer peripheral coating layer, 5: cell, 5a: inflow-side cell, 5b: outflow-side cell, 6: partition wall, 7: filler, 9: joining material layer, 20: monolithical type honeycomb structure, A: inflow-side end, and B: outflow-side end.

### DESCRIPTION OF THE PREFERRED EMBODIMENT

Hereinafter, embodiments of the present invention will be described with reference to the drawings. The present invention is not limited to the following embodiments, and can be changed, modified or improved without departing from the scope of the present invention. It is to be noted that unless otherwise specified, in the following description, a section is a section cut along a plane vertical to a cell central axis direction (the longitudinal direction), and a sectional area is the area of the section cut along the plane vertical to the cell central axis direction (the longitudinal direction). Moreover, in the following description, a honeycomb structure having a structure monolithically formed as a whole is an monolithical type honeycomb structure, and a honeycomb structure having a structure in which a plurality of honeycomb segments are combined via a joining material layer is a joined type honeycomb structure. Furthermore, when the monolithical type honeycomb structure and the joined type honeycomb structure are not especially distinguished from each other, the honeycomb structure is mentioned.

### (Embodiment 1)

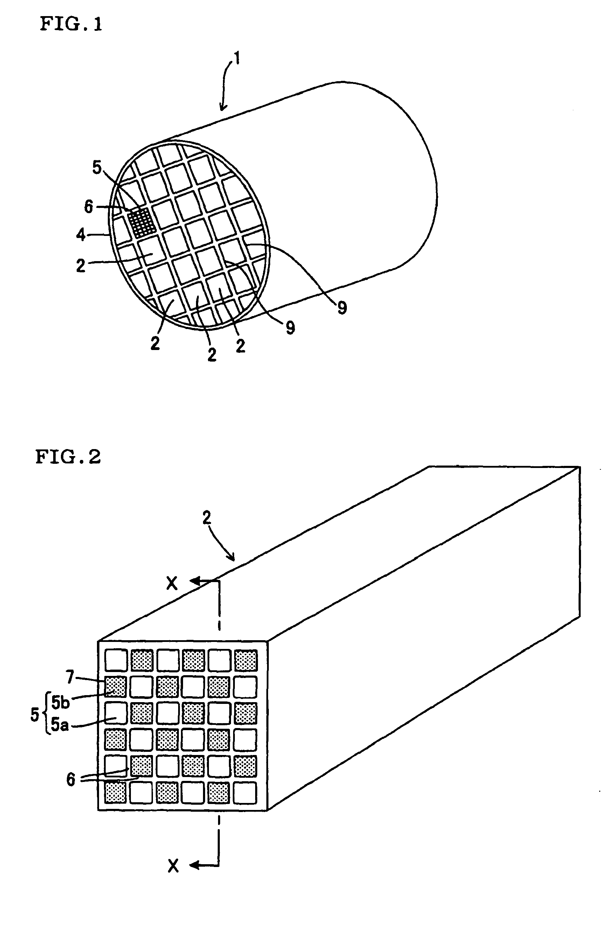

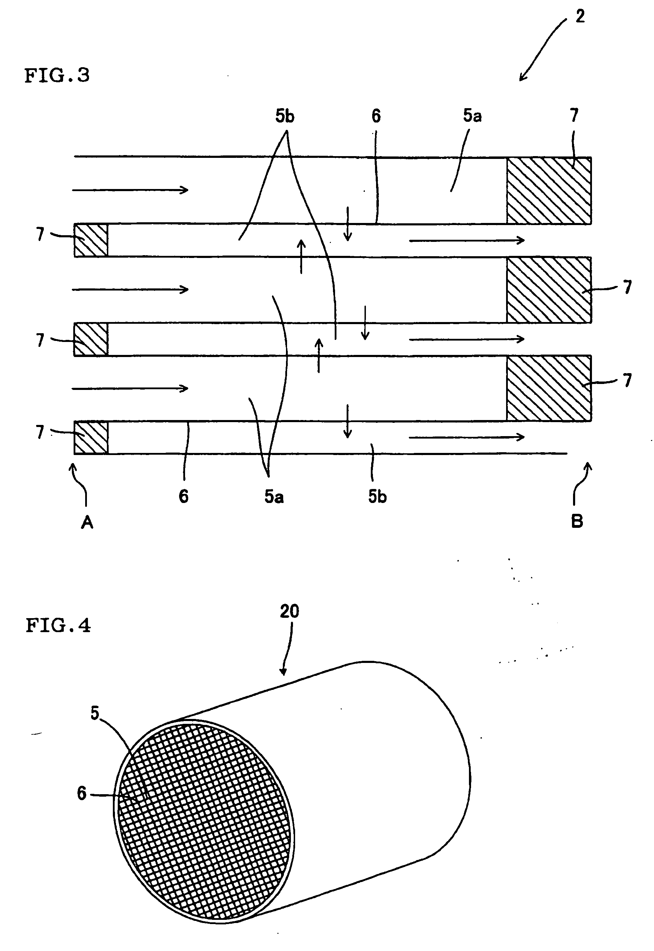

Fig. 1 is a perspective view schematically showing a joined type honeycomb structure 1 as one embodiment of the present invention. Fig. 2 is a perspective view showing a honeycomb segment 2 constituting the honeycomb structure 1 of Fig. 1. Furthermore, Fig. 3 is a sectional view of the honeycomb segment 2 cut along the X-X line of Fig. 2.

Here, as shown in Figs. 1 and 2, the honeycomb segment 2 constitutes a part of the whole constitution of the honeycomb structure 1 (a joined honeycomb segment article), and a plurality of honeycomb segments 2 are assembled in a direction vertical to the central axis direction of the honeycomb structure 1 to constitute the honeycomb structure 1. Cells 5 are arranged in parallel with one another in the central axis direction of the honeycomb structure 1, and the ends of the adjacent cells 5 are alternately plugged with a filler 7.

The honeycomb segment will further specifically be described. The honeycomb segment 2 is formed into a columnar shape, includes porous partition walls 6 for partitioning the plurality of cells 5 constituting flow channels of a fluid to be treated, and is provided with two types of cells 5a, 5b having different sectional areas as shown in Fig. 3. The sectional area of the inflow-side cell 5a is larger than that of the outflow-side cell 5b. The sectional shape of the inflow-side cell 5a may be different from that of the outflow-side cell 5b. That is, the section of each cell may have a desired shape such as an octagonal shape obtained by cutting portions corresponding to the corners of a quadrangular shape or a substantially quadrangular shape whose portions corresponding to corners are circular, as long as a segment strength and a PM collection area can sufficiently be secured. Here, the corners are vertexes and portions around the vertexes in a case where the sectional shape is the corresponding polygonal shape (a polygonal shape formed by extending a straight portion).

The inflow-side cell 5a and the outflow-side cell 5b are alternately arranged in a first direction and a second direction vertical to the first direction in cell sections. Moreover, the inflow-side cell 5a opened in an inflow-side end A and plugged in an outflow-side end B and the outflow-side cell 5b plugged in the inflow-side end A and opened in the outflow-side end B are alternately arranged, so that the fluid to be treated which has flowed into the opened inflow-side cells 5a in the inflow-side end A is transmitted through the partition walls 6, and discharged into the outflow-side cells 5b as the transmitted fluid, and the transmitted fluid can be discharged from the opened outflow-side cells 5b in the outflow-side end B.

Furthermore, in the present embodiment, the sectional area of each outflow-side plugging portion is larger than that of the inflow-side plugging portion. That is, the average of the vertical sectional areas of the plugging portions in the inflow-side end A with respect to the central axis direction of the cells and the average of the vertical sectional areas of the plugging portions in the outflow-side end B with respect to the central axis direction of the cells have a relation of S1 < S2, in which S1 is an average inflow-side plugging portion sectional area and S2 is an average outflow-side plugging portion sectional area. At this time, the average sectional area is in a range of preferably 0.2 mm² < S1 < 1.0 mm² and 0.4 mm² < S₂ < 1.4 mm², further preferably 0.3 mm² < S1 < 0.7 mm² and 0.6 mm² < S2 < 1.2 mm².

As the raw material of the honeycomb segment 2, from the viewpoints of strength and thermal resistance, it is preferable to use at least one type selected from the group consisting of silicon carbide, a silicon-silicon carbide based composite material, silicon nitride, cordierite, mullite, alumina, spinel, a silicon carbide-cordierite based composite material, a silicon-silicon carbide composite material, lithium aluminum silicate, aluminum titanate, and an Fe-Cr-Al based metal. Above all, silicon carbide or the silicon-silicon carbide based composite material is preferable.

To prepare the honeycomb segment 2, for example, a binder such as methyl cellulose, hydroxypropoxyl cellulose, hydroxyethyl cellulose, caroboxymethyl cellulose or polyvinyl alcohol, a pore former, a surfactant, water as a solvent and the like are added to the raw material appropriately selected from the above materials to form a clay having plasticity, and this clay is formed by extrusion into the above shape. Subsequently, after performing drying by microwaves, hot air or the like, sintering can be performed.

As the filler 7 for use in plugging the cells 5, a material similar to that of the honeycomb segment 2 may be used. To perform the plugging with the filler 7, while the cells 5 which are not plugged are masked, the end of the honeycomb segment 2 is immersed into the slurry-like filler 7 to fill the opened cells 5 with the material. At this time, the depths of the plugging portions of the outflow-side cells 5b are set to depths larger than those of the plugging portions of the inflow-side cells 5a. That is, the depths of the plugging portions in the inflow-side end A and the depths of the plugging portions in the outflow-side end B have a relation of D1 < D2, in which D1 is an inflow-side plugging portion depth and D2 is an outflow-side plugging portion depth. At this time, preferably, the depth D1 is in a range of 2 mm < D1 < 10 mm, and the depth D2 is in a range of 5 mm < D2 < 20 mm. Further preferably, the depth D1 is in a range of 3 mm < D1 < 7 mm, and the depth D2 is in a range of 8 mm < D2 < 18 mm. The depth of plugging portion can be set to be a desired value by adjusting the depth of the honeycomb segment 2 immersed into the filler 7 and changing the amount of the filler 7.

Moreover, at this time, the porosity of each plugging portion of the outflow-side cell 5b is set to be larger than that of each plugging portion of the inflow-side cell 5a. That is, the porosity of the plugging portion in the inflow-side end A and the porosity of the plugging portion in the outflow-side end B have a relation of P1 > P2, in which P1 is an inflow-side plugging portion porosity and P2 is an outflow-side plugging portion porosity. At this time, preferably, the porosity P1 is in a range of 50% < P1 < 70%, and the porosity P2 is in a range of 30% < P2 < 60%. Further preferably, the porosity P1 is in a range of 55% < P1 < 65%, and the porosity P2 is in a range of 35% < P2 < 55%. The plugging portion porosity can be set to be a desired value by adjusting a material such as silicon carbide as the material of the filler 7 and the particle diameters of the pore former.

Thus, in the honeycomb structure 1 of Embodiment 1, since the plugging portion depth of the outflow-side cell 5b is larger than that of the inflow-side cell 5a and the plugging portion porosity of the outflow-side cell 5b is larger than that of the inflow-side cell 5a, so that the thermal capacity of the outflow-side plugging portion can be increased, the local temperature rise of the outflow-side end during a regeneration treatment can be prevented, and the generation of crack or melting can be decreased. In other words, when the volumes of the plugging portions are increased, the thermal capacities of the plugging portions can effectively be increased. That is, when the average plugging portion area is increased or the plugging portion depths are increased, the volumes of the plugging portions are increased. From this viewpoint, it can be considered that a synergistic effect is produced.

The filling with the filler 7 may be performed before or after the firing after the forming of the honeycomb segment 2, but the filling is preferably performed before the firing, because only one firing step can be performed. That is, after drying the honeycomb segment 2 provided with the filler 7, heating and degreasing are performed, for example, in a nitrogen atmosphere, and then the firing in an inactive atmosphere of argon or the like can be performed to obtain the honeycomb segment constituting the honeycomb structure of the present invention. A firing temperature and the firing atmosphere vary in accordance with the raw material, and any person skilled in the art can appropriately select the firing temperature and the firing atmosphere for the selected raw material.

After preparing the honeycomb segment 2 as described above, the outer peripheral surface of the honeycomb segment 2 is coated with a slurry-like joining material layer 9, a plurality of honeycomb segments 2 are assembled to have a predetermined three-dimensional shape (the whole constitution of the honeycomb structure 1), and the assembled honeycomb segments are pressed, then heated and dried. Thus, the plurality of honeycomb segments 2 are monolithically joined to obtain a joined honeycomb segment article.

As shown in, for example, Fig. 1, the honeycomb structure 1 obtained in the present invention has a structure including the joined honeycomb segment article in which the joining faces of the plurality of honeycomb segments 2 are monolithically joined together via the joining material layers, and an outer peripheral coating layer 4 which covers the outer peripheral surface of the joined honeycomb segment article. In the structure, the plurality of cells 5 constituting flow channels of a fluid to be treated are arranged in parallel with one another in a central axis direction.

It is to be noted that the joining material layer 9 used in the present invention, with which the outer peripheral surface of the honeycomb segment 2 is coated, functions to join the honeycomb segments 2 together. To form the joining material layer 9, for example, after preparing the honeycomb segment 2, the outer peripheral surface of the honeycomb segment 2 is coated with the slurry-like joining material layer 9, the plurality of honeycomb segments 2 are assembled to obtain the predetermined three-dimensional shape (the shape structure of the honeycomb structure 1), and the assembled honeycomb segments are pressed, then heated and dried. In this case, the outer peripheral surfaces of the adjacent honeycomb segments 2 may be coated, but the only outer peripheral surface of one of the adjacent honeycomb segments 2 may be coated.

Preferable examples of the joining material layer 9 used in the present invention include an inorganic fiber, an inorganic binder, an organic binder, and inorganic particles. Specific examples of the inorganic fiber include an oxide fiber of alumino silicate, alumina or the like, and another fiber (e.g., an SiC fiber). Examples of the inorganic binder include silica sol, alumina sol and clay. Examples of the organic binder include polyvinyl alcohol (PVA), carboxymethyl cellulose (CMC) and methyl cellulose (MC). Examples of the inorganic particles include ceramic materials such as silicon carbide, silicon nitride, cordierite, alumina and mullite.

In the joined type honeycomb structure 1 formed as described above, as shown in Fig. 3, the inflow-side cells 5a are opened in the inflow-side end A, whereas the inflow-side cells are plugged with the filler 7 in the outflow-side end B. The outflow-side cells 5b adjacent to the inflow-side cells are plugged with the filler 7 in the inflow-side end A, but the outflow-side cell is opened in the outflow-side end B, and formed as a joining member of the honeycomb segment 2. When the cells are plugged in this manner, as shown in Fig. 2, the end of the honeycomb segment 2 has a checkered pattern. When the honeycomb structure 1 including these joined honeycomb segments 2 is arranged in an exhaust system of the exhaust gas, the exhaust gas flows from the left side of Fig. 3 into the inflow-side cells 5a of the honeycomb segment 2 and moves to the right side. Then, when the exhaust gas passes through the partition walls 6, a particulate matter (PM) such as soot or the like included in the exhaust gas is collected by the partition walls 6. Thus, the exhaust gas can be purified. When the PM is collected in this manner, the PM is deposited in the honeycomb segment 2 with an elapse of time to increase a pressure loss. Therefore, the regeneration treatment for burning the PM is performed. However, in the honeycomb structure of the present invention, on the inflow side and the outflow side of the fluid to be treated, the average plugging portion area, the plugging portion depths and the plugging portion porosities are varied, when joining the honeycomb segments 2. In consequence, the thermal capacities of the outflow-side plugging portions increase, and any crack or melting is not easily generated in the outflow-side end.

### (Embodiment 2)

Embodiment 2 of the present invention will be described. Fig. 4 is a perspective view schematically showing an monolithical type honeycomb structure 20 as another embodiment of the present invention. The honeycomb structure 20 is monolithically formed, cells 5 are arranged in parallel with one another in the central axis direction of the honeycomb structure 20, and the ends of the adjacent cells 5 are alternately plugged with a filler 7.

The embodiment will further specifically be described. The monolithical type honeycomb structure 20 is formed into a columnar shape, includes porous partition walls 6 for partitioning the plurality of cells 5 constituting flow channels of a fluid to be treated, and is provided with two types of cells 5a, 5b having different sectional areas of sections cut along a plane vertical to the central axis direction of the cells 5. In the same manner as in Embodiment 1, the sectional area of the inflow-side cell 5a is larger than that of the outflow-side cell 5b, and sectional shape is an octagonal shape obtained by cutting portions corresponding to corners or a substantially quadrangular shape whose portions corresponding to corners are circular. The outflow-side cell 5b has a quadrangular sectional shape.

As to a honeycomb constitution, a material such as the filler 7 for use in plugging and other details, the present embodiment is almost similar to Embodiment 1 except that the honeycomb structure is monolithically formed, and hence the description thereof is omitted.

### [Examples]

Hereinafter, the present invention will be described in more detail in accordance with examples, but the present invention is not limited to these examples.

### (Example 1)

A honeycomb structure was prepared from a material having a porosity of 52%. The honeycomb structure had a cylindrical shape with a diameter of 144 mm x a length of 152 mm, and a square cell sectional shape. The opposite ends of adjacent cells were plugged, an inflow-side plugging portion depth D1 was 5.0 mm, an outflow-side plugging portion depth D2 was 10.0 mm, an inflow-side plugging portion porosity P1 was 60.0%, an outflow-side plugging portion porosity P2 was 50.0%, an average inflow-side plugging portion sectional area S1 was 0.5 mm², and an average outflow-side plugging portion sectional area S2 was 1.0 mm². Table 1 shows values of parameters together with an average plugging portion sectional area ratio S2/S1 as a ratio of the average outflow-side plugging portion sectional area S2 with respect to the average inflow-side plugging portion sectional area S1.

### (Examples 2 to 8, Comparative Examples 1 to 19)

Examples 2 to 8 and Comparative Examples 1 to 19 were manufactured in the same manner as in Example 1 except that an outflow-side plugging portion depth D2, an outflow-side plugging portion porosity P2, an average inflow-side plugging portion sectional area S1 and an average outflow-side plugging portion sectional area S2 were changed as shown in Table 1.

### (Evaluation)

Each of the honeycomb structures according to the examples and the comparative examples was arranged in an exhaust passage of an engine to constitute an exhaust gas purification device, the engine was operated with a rotation number of 3000 min⁻¹ and a torque of 50 Nm for a predetermined time, and then a regeneration treatment was performed. An experiment was carried out in this manner, and the maximum temperature of the honeycomb structure during regeneration treatment was measured. Results are shown in Table 1. Moreover, a difference of a thermal capacity between each outflow-side plugging portion and each inflow-side plugging portion of each honeycomb structure (the outflow-side plugging portion thermal capacity - the inflow-side plugging portion thermal capacity) is also shown as a plugging portion thermal capacity difference in Table 1.

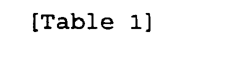

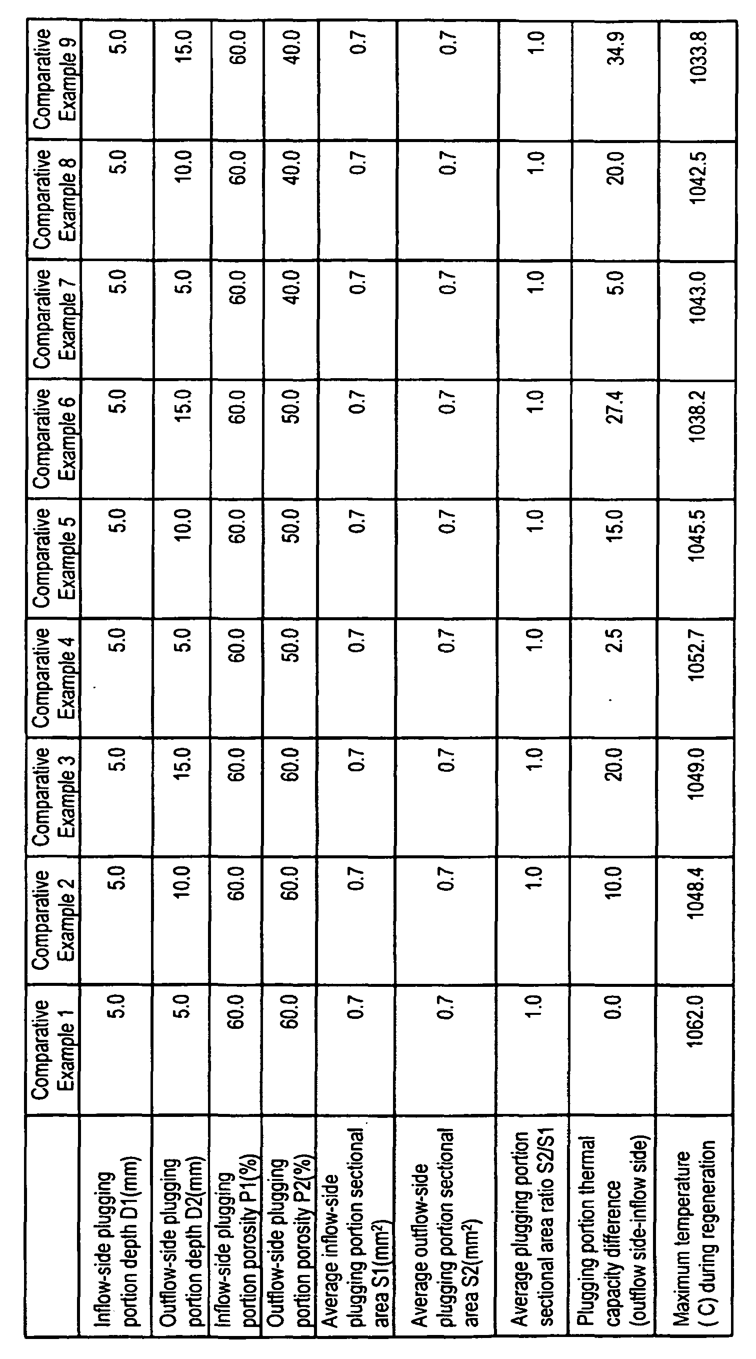

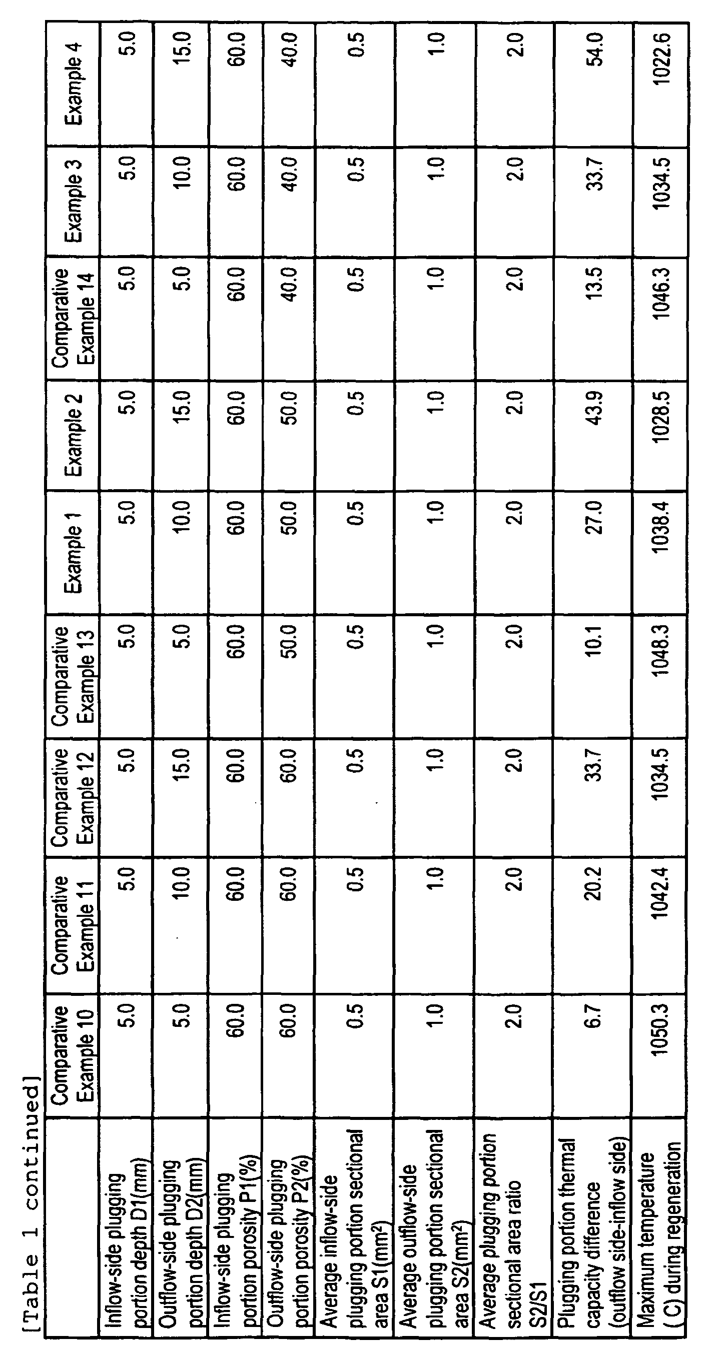

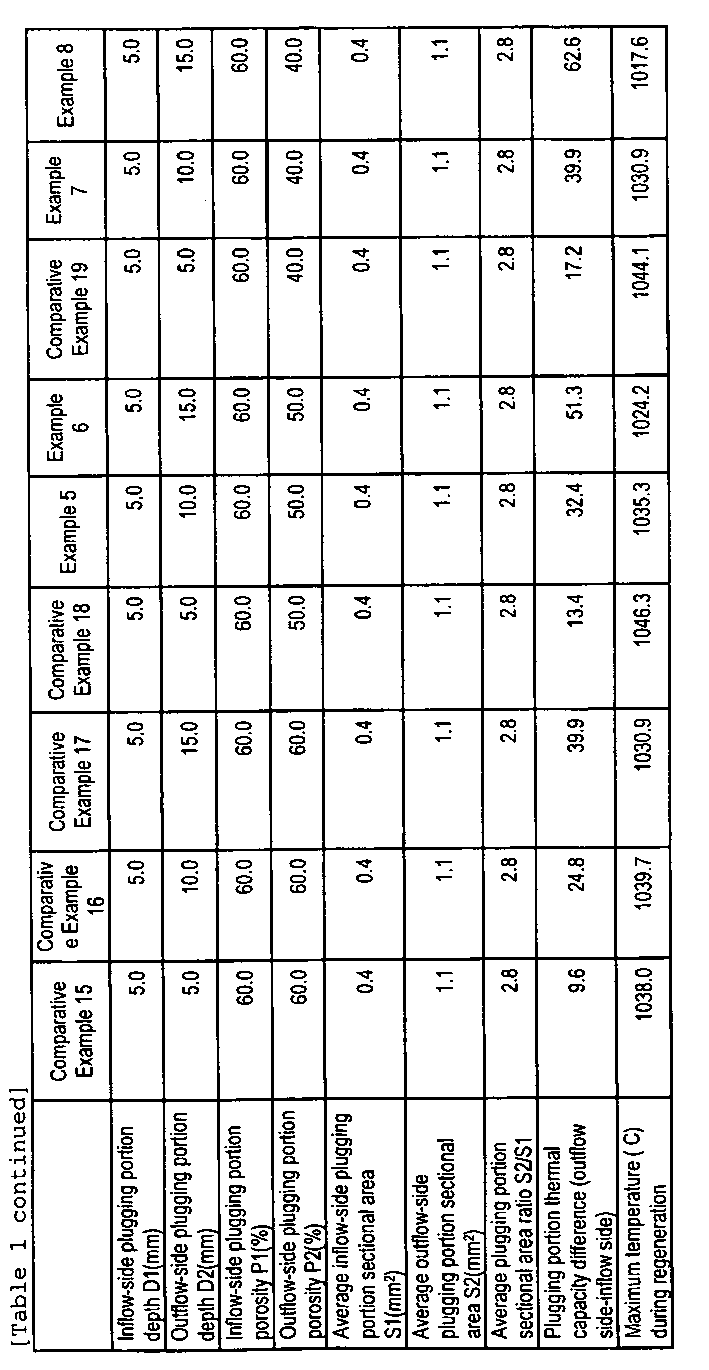

As shown in Table 1, in the honeycomb structure according to each example, as compared with the honeycomb structure of each comparative example in a case where at least one of three parameters, that is, the outflow-side plugging portion depth D2, the outflow-side plugging portion porosity P2 and the average plugging portion sectional area ratio S2/S1 does not satisfy the requirement of the present invention, the maximum temperature during the regeneration treatment is minimized. For example, in Example 8, as compared with Comparative Example 1 which is a usual quadrangular cell honeycomb structure, an effect of lowering the maximum temperature as much as about 50°C during the regeneration treatment is confirmed. The temperature during the regeneration treatment rises to about 1300°C at which the DPF is melted, if a soot deposited amount, an inlet exhaust gas temperature or the like increases. However, if regenerating conditions are in a common-sense range (the soot deposited amount is less than 10 g/L, the inlet exhaust gas temperature is less than 650°C), the temperature during the regeneration treatment converges to about 1200°C. Furthermore, when the thermal capacity of the outflow-side plugging portion increases (a large thermal capacity difference is made between the outlet side and the inlet side), the temperature during the regeneration treatment lowers. In the honeycomb structure of the present invention, when the outflow-side plugging portion porosity P2 is smaller than the inflow-side plugging portion porosity P1, the outflow-side plugging portion depth D2 is larger than the inflow-side plugging portion depth D1 and the average outflow-side plugging portion sectional area S2 is larger than the average inflow-side plugging portion sectional area S1, the plugging portion thermal capacity difference increases, and the maximum temperature during the regeneration treatment can be suppressed. On the other hand, when for a purpose of increasing the plugging portion thermal capacity difference (the outflow side - the inflow side), the outflow-side plugging portion depth D2 is excessively increased beyond the scope of the present invention, the outflow-side plugging portion porosity P2 is excessively lowered and the average plugging portion sectional area ratio S2/S1 is excessively increased, a problem of the deterioration of a pressure loss occurs. In the honeycomb structure of the present invention, the plugging portion depths, the plugging portion porosities and the average plugging portion sectional areas on the inflow side and the outflow side are controlled into predetermined ranges, to keep a large plugging portion thermal capacity difference (the outflow side - the inflow side) and sufficiently lower the maximum temperature during the regeneration treatment. Moreover, honeycomb strength, conventional honeycomb function or the like is not impaired, but the generation of crack, melting or the like during the regeneration treatment can be decreased.

A honeycomb structure of the present invention is preferably used as a collecting filter for an exhaust gas, and is especially useful as a diesel particulate filter (DPF) for collecting and removing a particulate matter (PM) included in an exhaust gas from a diesel engine or the like.

## Claims

1. A honeycomb structure having a plurality of cells partitioned by porous partition walls and constituting flow channels of a fluid to be treated, the predetermined cells in the inflow-side end of the fluid to be treated being plugged with a filler, the remaining cells in the outflow-side end of the fluid to be treated being plugged with the filler,
wherein the average of the vertical sectional areas of plugging portions in the inflow-side end with respect to the central axis direction of the cells and the average of the vertical sectional areas of plugging portions in the outflow-side end with respect to the central axis direction of the cells have a relation of S1 < S2, in which S1 is an average inflow-side plugging portion sectional area and S2 is an average outflow-side plugging portion sectional area,
the depths of the plugging portions in the inflow-side end and the depths of the plugging portions in the outflow-side end have a relation of D1 < D2, in which D1 is an inflow-side plugging portion depth and D2 is an outflow-side plugging portion depth,
the porosity of the filler in the inflow-side end and the porosity of the filler in the outflow-side end have a relation of P1 > P2, in which P1 is an inflow-side plugging portion porosity and P2 is an outflow-side plugging portion porosity, and
the thermal capacities of the plugging portions in the outflow-side end are larger than those of the plugging portions in the inflow-side end.

2. The honeycomb structure according to claim 1, wherein the average inflow-side plugging portion sectional area S1 is in a range of 0.2 mm² < S1 < 1.0 mm²,
the average outflow-side plugging portion sectional area S2 is in a range of 0.4 mm² < S2 < 1.4 mm²,
the inflow-side plugging portion depth D1 is in a range of 2 mm < D1 < 10 mm,
the outflow-side plugging portion depth D2 is in a range of 5 mm < D2 < 20 mm,
the inflow-side plugging portion porosity P1 is in a range of 50% < P1 < 70%, and
the outflow-side plugging portion porosity P2 is in a range of 30% < P2 < 60%.

3. The honeycomb structure according to claim 1, wherein the average inflow-side plugging portion sectional area S1 is in a range of 0.3 mm² < S1 < 0.7 mm²,
the average outflow-side plugging portion sectional area S2 is in a range of 0.6 mm² < S2 < 1.2 mm²,
the inflow-side plugging portion depth D1 is in a range of 3 mm < D1 < 7 mm,
the outflow-side plugging portion depth D2 is in a range of 8 mm < D2 < 18 mm,
the inflow-side plugging portion porosity P1 is in a range of 55% < P1 < 65%, and
the outflow-side plugging portion porosity P2 is in a range of 35% < P2 < 55%.

4. The honeycomb structure according to any one of claims 1 to 3, wherein the opposite ends of the cells disposed on both sides which sandwich one of the partition walls are plugged, and
the vertical sectional shape of the cell plugged in the inflow-side end with respect to the central axis direction is different from that of the cell plugged in the outflow-side end with respect to the central axis direction.

## Patentansprüche

1. Wabenstruktur mit einer Vielzahl an Zellen, die durch poröse Trennwände getrennt sind und Durchflusskanäle für ein zu behandelndes Fluid bilden, wobei vorbestimmte Zellen an dem einströmseitigen Ende des zu behandelnden Fluids mit einem Füllstoff verschlossen sind und die verbleibenden Zellen an dem ausströmseitigen Ende des zu behandelnden Fluids mit dem Füllstoff verschlossen sind,
worin der Durchschnitt der vertikalen Querschnittsflächen der verschlossenen Abschnitte an dem einströmseitigen Ende in Bezug auf die Richtung der Mittelachse der Zellen und der Durchschnitt der vertikalen Querschnittsflächen der verschlossenen Abschnitte an dem ausströmseitigen Ende in Bezug auf die Richtung der Mittelachse der Zellen in folgendem Verhältnis zueinander stehen: S1 < S2, worin S1 für einen durchschnittlichen Querschnitt der verschlossenen Abschnitte an dem einströmseitigen Ende steht und S2 für einen durchschnittlichen Querschnitt der verschlossenen Abschnitte an dem ausströmseitigen Ende steht,
die Tiefe der verschlossenen Abschnitte an dem einströmseitigen Ende und die Tiefe der verschlossenen Abschnitte an dem ausströmseitigen Ende in folgendem Verhältnis zueinander stehen: D1 < D2, worin D1 für die Tiefe eines verschlossenen Abschnitts an dem einströmseitigen Ende und D2 für die Tiefe eines verschlossenen Abschnitts an dem ausströmseitigen Ende steht,
die Porosität des Füllstoffs an dem einströmseitigen Ende und die Porosität des Füllstoffs an dem ausströmseitigen Ende in folgendem Verhältnis zueinander stehen: P1 > P2, worin P1 für die Porosität eines verschlossenen Abschnitts an dem einströmseitigen Ende und P2 für die Porosität eines verschlossenen Abschnitts an dem ausströmseitigen Ende steht, und
die Wärmekapazität der verschlossenen Abschnitte an dem ausströmseitigen Ende höher ist als jene der verschlossenen Abschnitte an dem einströmseitigen Ende.

2. Wabenstruktur nach Anspruch 1, worin der durchschnittliche Querschnitt von verschlossenen Abschnitten an dem einströmseitigen Ende S1 im Bereich von 0,2 mm² < S1 < 1,0 mm² liegt,
der durchschnittliche Querschnitt von verschlossenen Abschnitten an dem ausströmseitigen Ende S2 im Bereich von 0,4 mm² < S2 < 1,4 mm² liegt,
die Tiefe der verschlossenen Abschnitte an dem einströmseitigen Ende D1 im Bereich von 2 mm < D1 < 10 mm liegt,
die Tiefe der verschlossenen Abschnitte an dem ausströmseitigen Ende D2 im Bereich von 5 mm < D2 < 20 mm liegt,
die Porosität an dem einströmseitigen Ende P1 im Bereich von 50 % < P1 < 70 % liegt und
die Porosität an dem ausströmseitigen Ende P2 im Bereich von 30 % < P1 < 60 % liegt.

3. Wabenstruktur nach Anspruch 1, worin der durchschnittliche Querschnitt von verschlossenen Abschnitten an dem einströmseitigen Ende S1 im Bereich von 0,3 mm² < S1 < 0,7 mm² liegt,
der durchschnittliche Querschnitt von verschlossenen Abschnitten an dem ausströmseitigen Ende S2 im Bereich von 0,6 mm² < S2 < 1,2 mm² liegt,
die Tiefe der verschlossenen Abschnitte an dem einströmseitigen Ende D1 im Bereich von 3 mm < D1 < 7 mm liegt,
die Tiefe der verschlossenen Abschnitte an dem ausströmseitigen Ende D2 im Bereich von 8 mm < D2 < 18 mm liegt,
die Porosität an dem einströmseitigen Ende P1 im Bereich von 55 % < P1 < 65 % liegt und
die Porosität an dem ausströmseitigen Ende P2 im Bereich von 35 % < P1 < 55 % liegt.

4. Wabenstruktur nach einem der Ansprüche 1 bis 3, worin die entgegengesetzten Enden der Zellen, die an beiden Seiten angeordnet sind und zwischen denen eine der Trennwände angeordnet ist, verschlossen sind, und
die vertikale Querschnittsform der an dem einströmseitigen Ende verschlossenen Zelle in Bezug auf die Richtung der Mittelachse anders ist als jene der an dem ausströmseitigen Ende verschlossenen Zelle in Bezug auf die Richtung der Mittelachse.

## Revendications

1. Structure en nid d'abeilles comportant une pluralité d'alvéoles séparées par des parois de séparation poreuses et constituant des canaux d'écoulement d'un fluide à traiter, les alvéoles prédéterminées dans l'extrémité côté afflux du fluide à traiter étant bouchées avec une matière de remplissage, les alvéoles restantes dans l'extrémité côté écoulement du fluide à traiter étant bouchées avec la matière de remplissage,
où la moyenne de zones en section verticale des portions de bouchage dans l'extrémité côté afflux par rapport à la direction de l'axe central des alvéoles et la moyenne des zones en section verticale des portions de bouchage dans l'extrémité côté écoulement par rapport à la direction de l'axe central des alvéoles ont une relation de S1 < S2, où S1 est une zone en section de portion de bouchage côté afflux moyenne et S2 est une zone en section de portion de bouchage côté écoulement moyenne,
les profondeurs des portions de bouchage dans l'extrémité côté afflux et les profondeurs des portions de bouchage dans l'extrémité côté écoulement ont une relation de D1 < D2, où D1 est une profondeur de portion de bouchage côté afflux, et D2 est une profondeur de portion de bouchage côté écoulement,
la porosité de la matière de remplissage dans l'extrémité côté afflux et la porosité de la matière de remplissage dans l'extrémité côté écoulement ont une relation de P1 > P2, où P1 est une porosité de portion de bouchage côté afflux et P2 est une porosité de portion de bouchage côté écoulement, et
les capacités thermiques des portions de bouchage dans l'extrémité côté écoulement sont plus grandes que celles des portions de bouchage dans l'extrémité côté afflux.

2. Structure en nid d'abeilles selon la revendication 1, dans laquelle la zone en section de portion de bouchage côté afflux moyenne S1 est dans la plage de 0,2 mm² < S1 < 1,0 mm²,
la zone en section de portion de bouchage côté écoulement moyenne S2 est dans une plage de 0,4 mm² < S2 < 1,4 mm²,
la profondeur de la portion de bouchage côté afflux D1 est dans une plage de 2 mm < D1 < 10 mm,
la profondeur de la portion de bouchage côté écoulement D2 est dans la plage de 5 mm < D2 < 20 mm,
la porosité de la portion de bouchage côté afflux P1 est dans une plage de 50% < P1 < 70%, et
la porosité de la portion de bouchage côté écoulement P2 est dans une plage de 30% < P2 < 60%.

3. Structure en nid d'abeilles selon la revendication 1, dans laquelle la zone en section de la portion de bouchage côté afflux moyenne S1 est dans une plage de 0,3 mm² < Si < 0,7 mm²,
la zone en section de la portion de bouchage côté écoulement moyenne S2 est dans une plage de 0,6 mm² < S2 < 1,2 mm²,
la profondeur de la portion de bouchage côté afflux D1 est dans une plage de 3 mm < D1 < 7 mm,
la profondeur de la portion de bouchage côté écoulement D2 est dans une plage de 8 mm < D2 < 18 mm,
la porosité de la portion de bouchage côté afflux P1 est dans une plage de 55% < P1 < 65%, et
la porosité de la portion de bouchage côté écoulement P2 est dans une plage de 35% < P2 < 55%.

4. Structure en nid d'abeilles selon l'une quelconque des revendications 1 à 3, dans laquelle les extrémités opposées des alvéoles disposées sur les deux côtés qui prennent en sandwich une des parois de séparation sont bouchées, et
la forme en section verticale de l'alvéole bouchée dans l'extrémité côté afflux par rapport à la direction de l'axe central est différente de celle de l'alvéole bouchée dans l'extrémité côté écoulement par rapport à la direction de l'axe central.
